# FASCICULE DE BREVET EUROPEEN

(11) **EP 2 961 626 B1**
(45) Date de publication et mention de la délivrance du brevet: **15.03.2017**
(21) Numéro de dépôt: 14707196.3
(22) Date de dépôt: 28.02.2014
(51) Int. Cl.: F24H 1/00, H05B 3/00, H05B 3/02, H05B 3/06, B60H 1/22, B60H 1/00, F24H 1/10

(54) **RECHAUFFEUR ELECTRIQUE POUR CIRCUIT DE CHAUFFAGE DE VEHICULE**
ELEKTRISCHE HEIZVORRICHTUNG FÜR DEN HEIZKREISLAUF EINES FAHRZEUGS
ELECTRIC HEATER FOR VEHICLE HEATING CIRCUIT

(30) Priorité: 28.02.2013 FR 1351773
(43) Date de publication de la demande: 06.01.2016
(73) Titulaire: Valeo Systemes Thermiques, 78320 Le Mesnil Saint Denis (FR)
(72) Inventeur: PIERRON, Frédéric, F-78120 Rambouillet (FR); TELLIER, Laurent, F-75116 Paris (FR); LEBORGNE, José, F-78990 Elancourt (FR)
(74) Mandataire: Metz, Gaëlle
(86) Numéro de dépôt international: PCT/EP2014/054001
(87) Numéro de publication internationale: WO 2014/131902

(56) Documents cités:
- WO-A1-2010/025955
- FR-A1- 2 742 384
- FR-A1- 2 814 802
- JP-A- 2012 096 779

## Description

L'invention concerne un réchauffeur électrique destiné à équiper, par exemple, un circuit de chauffage de véhicule automobile renfermant un fluide caloporteur, et par exemple un liquide caloporteur.

Un tel réchauffeur électrique permet de chauffer l'habitacle d'un véhicule électrique ou hybride, en réchauffant par effet Joule le liquide caloporteur du circuit de chauffage de ce véhicule, ce circuit intégrant un radiateur pour dissiper dans l'habitacle la chaleur apportée par le réchauffeur.

Un réchauffeur électrique pour circuit de chauffage de véhicule automobile renfermant un liquide caloporteur, comprenant une première entrée de fluide ainsi qu'une première sortie de fluide et une seconde sortie de fluide, et des moyens pour chauffer électriquement le liquide caloporteur allant à la première et à la seconde sortie, est connu du document WO 2010/025955 A, qui est considéré comme l'art antérieur le plus proche.

Le radiateur de ce circuit de chauffage comporte une portion gauche et une portion droite, dédiées respectivement au chauffage de la partie gauche et de la partie droite de l'habitacle, sachant qu'en pratique, le radiateur s'étend de part et d'autre d'une paroi qui sépare sa portion gauche de sa portion droite.

Complémentairement, un volet mélangeur est prévu pour ajuster la température de la partie gauche de l'habitacle, en ajustant pour l'air injecté en partie gauche de l'habitacle, la proportion d'air extérieur et d'air réchauffé par la portion gauche du radiateur. De manière analogue, un autre volet mélangeur permet de réguler la température de la partie droite de l'habitacle.

Le but de l'invention est de proposer une autre solution pour chauffer au moins deux zones, par exemple la partie gauche et la partie droite de l'habitacle, à des températures différentes.

A cet effet, l'invention a pour objet un réchauffeur électrique pour circuit de chauffage de véhicule automobile renfermant un liquide caloporteur, ce réchauffeur comprenant une entrée de fluide ainsi qu'une première sortie de fluide et une seconde sortie de fluide, et des moyens pour chauffer électriquement le liquide caloporteur et pour répartir de manière commandée ce chauffage entre le liquide caloporteur allant à la première sortie et le liquide caloporteur allant à la seconde sortie, la première et la seconde sortie étant destinées à être raccordées respectivement à un premier et à un second radiateur du circuit de chauffage, pour réchauffer ces deux radiateurs, par exemple distincts, à des températures différentes.

Avec cette solution, c'est directement le réchauffeur qui répartit la chaleur diffusée vers différentes parties de l'habitacle, par l'intermédiaire de radiateurs dédiés à chaque partie d'habitacle, de sorte qu'il n'est plus nécessaire de prévoir des volets mélangeurs pour réguler séparément la température de deux parties de l'habitacle.

L'invention concerne également un réchauffeur tel que défini ci-dessus, comprenant un premier organe chauffant et un second organe chauffant distincts et agencés pour recevoir chacun une partie du liquide caloporteur admis par l'entrée, et une carte électronique de puissance pour alimenter ces organes chauffants en répartissant de façon commandée la puissance injectée dans chaque organe chauffant, les premier et second organes chauffants ayant leurs sorties reliées respectivement à la première et à la seconde sortie du réchauffeur.

L'invention concerne également un système de chauffage de véhicule automobile comprenant un circuit de chauffage renfermant un liquide caloporteur, ce circuit de chauffage étant équipé d'un premier et d'un second radiateur pour diffuser vers deux régions distinctes de l'habitacle du véhicule de la chaleur, et d'un réchauffeur électrique tel que défini ci-dessus, la première et la seconde sortie de fluide du réchauffeur étant raccordées respectivement au premier et au second radiateur, les sorties du premier et du second radiateur étant conjointement raccordées à l'entrée du réchauffeur.

L'invention concerne également un système tel que défini ci-dessus, dans lequel les deux radiateurs sont intégrés à un même organe de diffusion de chaleur.

Selon une caractéristique possible, les premier et second radiateurs dudit système de chauffage forment un radiateur d'une seule pièce.

Selon une autre caractéristique possible, les premier et second radiateurs dudit système de chauffage sont séparés l'un de l'autre par une paroi.

La paroi séparant le premier et le second radiateur, qui est par exemple athermique (ou adiabatique), permet de limiter les transferts de chaleur entre lesdits radiateurs (ou encore d'isoler thermiquement, au moins partiellement, les radiateurs l'un par rapport à l'autre).

Selon une autre caractéristique possible, l'organe de diffusion de chaleur comprend au moins une sortie qui est reliée, d'une part, aux sorties des premier et second radiateurs et, d'autre part, à l'entrée du réchauffeur.

Selon une autre caractéristique possible, l'organe de diffusion de chaleur dudit système de chauffage comprend deux sorties qui sont reliées respectivement aux sorties des premier et second radiateurs.

Selon une autre caractéristique possible, les premier et second radiateurs sont intégrés dans des organes de diffusion de chaleur distincts l'un de l'autre.

Ainsi, lesdits organes de diffusion de chaleur qui sont dédiés à la diffusion de chaleur dans l'habitacle du véhicule peuvent être montés à proximité des zones dans lesquelles on souhaite diffuser de la chaleur.

L'invention sera mieux comprise, et d'autres buts, détails, caractéristiques et avantages de celle-ci apparaîtront plus clairement au cours de la description suivante d'un mode de réalisation particulier de l'invention, donnée uniquement à titre illustratif et non limitatif, en référence aux dessins annexés, sur lesquels :
- la figure 1 représente une vue schématique partielle d'un système de chauffage intégrant un réchauffeur selon l'invention ;
- la figure 2 est une vue éclatée en perspective du réchauffeur de la figure 1 ;
- les figures 3a à 3c représentent des vues schématiques de variantes de réalisation d'un système de chauffage selon l'invention.

L'idée à la base de l'invention est de prévoir pour le circuit de chauffage un même et unique organe assurant conjointement le réchauffage et la répartition de la chaleur d'un fluide caloporteur, et plus particulièrement d'un liquide caloporteur, dirigé vers deux radiateurs distincts du circuit de chauffage, afin de réguler selon deux températures de consigne deux zones du véhicule, par exemple la partie gauche et la partie droite de l'habitacle.

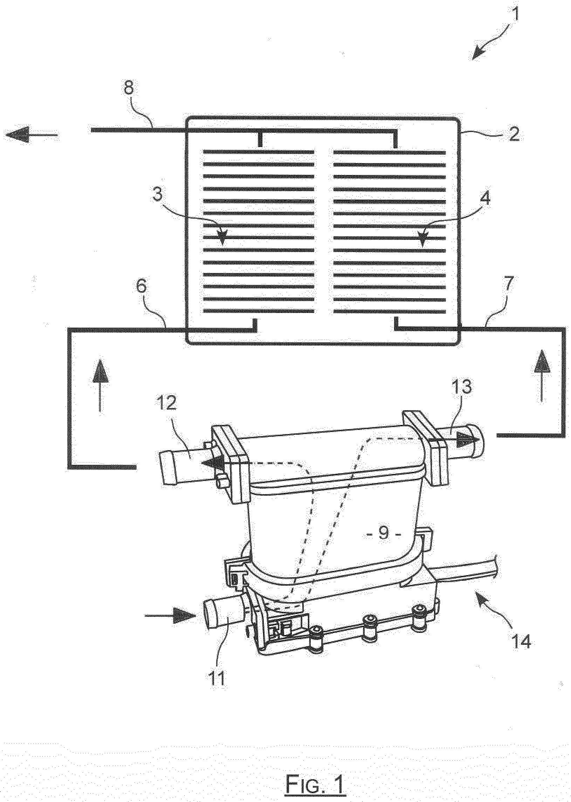

Le système de chauffage qui est représenté à la figure 1 comporte un circuit de chauffage 1 et un organe central 2 qui renferme ici deux radiateurs distincts 3 et 4 dédiés respectivement à diffuser la chaleur vers deux zones de l'habitacle du véhicule, par exemple la partie gauche et la partie droite dudit habitacle, équipé de ce système de chauffage.

Ces radiateurs 3 et 4 font ici partie d'un organe central 2 monté à l'avant du véhicule et dédié à la diffusion de chaleur dans l'habitacle, de sorte que ces deux radiateurs 3 et 4 ont simplement l'apparence d'un seul radiateur. Chaque radiateur 3, 4 comporte une entrée qui lui est propre, ces entrées étant respectivement repérées par 6 et 7, et les sorties de ces deux radiateurs sont par exemple réunies en une même et unique sortie repérée par 8.

On notera que dans une variante de réalisation non représentée, les premier 3 et second 4 radiateurs peuvent former un radiateur d'une seule pièce (ou encore monobloc).

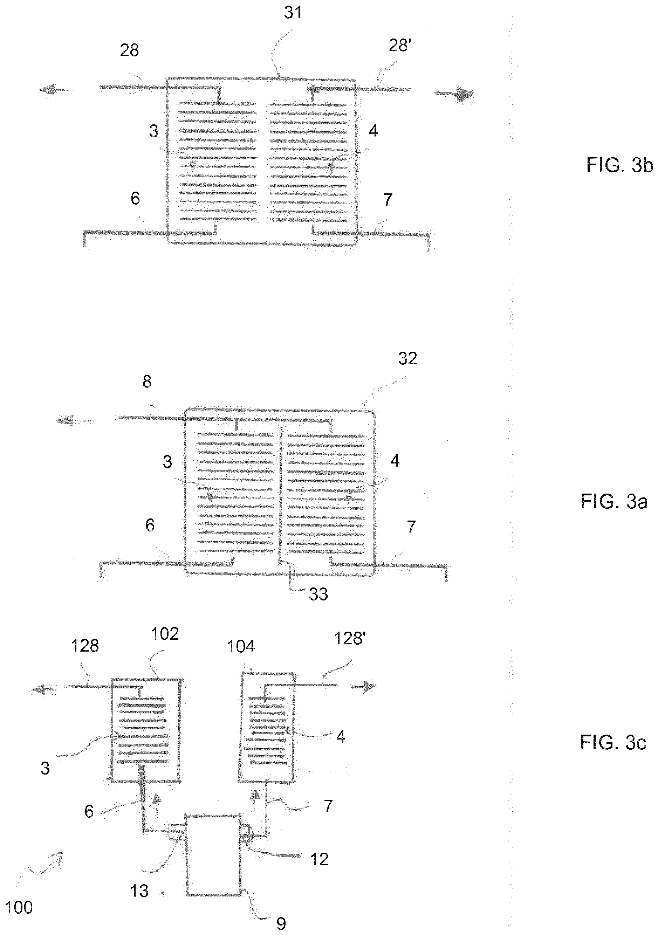

Cet ensemble est alimenté en liquide caloporteur, par l'intermédiaire d'un réchauffeur électrique 9 qui comporte une entrée de fluide 11 (par exemple unique), ainsi que deux sorties distinctes 12 et 13 qui sont connectées respectivement à l'entrée 6 et à l'entrée 7 par l'intermédiaire de tubulures du système de chauffage. On notera que les premier et second radiateurs 3 et 4 distincts peuvent être de plus séparés l'un de l'autre par une paroi 33, par exemple une paroi athermique (cette variante de réalisation est plus particulièrement illustrée à la figure 3a).

La sortie 8 de l'organe 2 qui réunit les sorties de radiateurs 3 et 4 est, quant à elle, connectée à l'entrée 11 du réchauffeur 9. D'autres composants non représentés du circuit 1, comme par exemple un élément de refroidissement, peuvent le cas échéant être interposés entre la sortie 8 des radiateurs et l'entrée 11 du réchauffeur 9.

Le réchauffeur 9 est piloté et alimenté électriquement par l'intermédiaire de câbles 14 reliés, d'une part, à une source d'alimentation électrique du véhicule et, d'autre part, à une unité de commande non représentée. Ce réchauffeur électrique 9 intègre des moyens pour réchauffer le fluide qu'il reçoit à son entrée 11 et pour répartir la puissance thermique de réchauffage de manière commandée, entre le fluide qui est dirigé vers sa première sortie 12 et le fluide dirigé vers sa deuxième sortie 13.

Autrement dit, ce réchauffeur 9 est capable de délivrer sur la sortie 12 un fluide qui est à une température différente du fluide qu'il délivre au niveau de sa sortie 13.

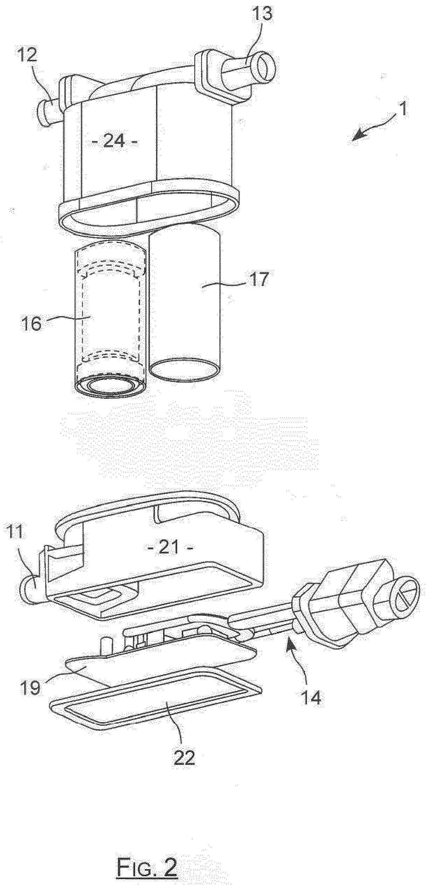

Dans l'exemple de réalisation illustré aux figures 1 et 2, ce réchauffeur 9 comporte à l'intérieur de son carter deux éléments chauffants par effet Joule 16 et 17 ainsi qu'un circuit d'électronique de puissance 19 qui alimente ces deux éléments de chauffe 16 et 17, à partir de la puissance électrique et des instructions de commandes reçues sur les câbles 14.

Comme cela est visible à la figure 2, le carter comporte un bas de carter 21 intégrant l'entrée 11 ainsi que l'arrivée des câbles 14, et constituant un boîtier renfermant de manière sensiblement étanche la carte d'électronique de puissance 19, cette partie inférieure étant fermée par un capot inférieur 22.

Le fluide qui est admis par l'entrée 11 s'engage dans deux canaux non visibles dans les figures, mais réalisés dans une région supérieure du bas de carter 21, de manière à constituer deux flux de fluide distincts. Ces deux flux de fluide traversent respectivement et parallèlement l'élément de chauffage 16 et l'élément de chauffage 17, de manière à être réchauffés différemment. En effet, la carte électronique 19 alimente les deux éléments de chauffe 16 et 17 qui sont sensiblement identiques avec des puissances différentes, conformément à des instructions de commande que cette carte électronique 19 reçoit d'une unité de contrôle non représentée.

Le fluide réchauffé par l'élément de chauffe 16 s'évacue vers la sortie 12 pour alimenter le premier radiateur 3, alors que le fluide réchauffé par l'élément de chauffe 17 s'évacue vers la sortie 13 pour alimenter le second radiateur 4.

Le bas de carter 21 est fermé par un haut de carter 24, qui renferme les éléments 16 et 17, et qui comporte les sorties 12 et 13, cette partie supérieure 24 constituant une coiffe venant fermer la partie haute du bas de carter 21.

Comme cela est notamment visible à la figure 1, l'invention permet de simplifier l'architecture du circuit d'un système de chauffage de véhicule électrique ou hybride assurant le chauffage de deux parties du véhicule à deux températures de consigne différentes.

Par ailleurs, dans une variante de réalisation illustrée très schématiquement à la figure 3b, un organe de diffusion de chaleur 31 comprend une pluralité de sorties qui sont reliées à au moins l'une des sorties de radiateurs 3 et 4.

Ladite pluralité de sorties de l'organe 31 sont par exemple aptes à se réunir en un seul conduit (non représenté) relié à l'entrée 11 du réchauffeur 9.

Plus particulièrement, l'organe 31 comprend deux sorties 28 et 28' qui sont respectivement reliées aux sorties des radiateurs 3 et 4. Lesdites deux sorties de l'organe 31 sont par exemple disposées sur des côtés opposés de l'organe 31.

Dans une autre variante de réalisation illustrée très schématiquement à la figure 3c, un système de chauffage 100 comprend un réchauffeur électrique 9 tel que défini ci-dessus. Les première et seconde sorties de fluide 12 et 13 dudit réchauffeur électrique 9 sont reliées respectivement aux entrées des radiateurs 3 et 4. Lesdits radiateurs 3 et 4, quant à eux, sont respectivement intégrés dans un premier 102 et un deuxième 104 organe de diffusion de chaleur.

Les premier 102 et deuxième 104 organes sont distincts l'un de l'autre et peuvent être montés à des endroits différents du véhicule.

On peut ainsi, lors de la conception et/ou du montage du véhicule, inclure plus aisément le système de chauffage 100 selon l'invention dans ledit véhicule.

De plus, chacun desdits organes 102 et 104 comprend au moins une sortie respectivement référencée 128 et 128' qui est reliée, respectivement, à la sortie des radiateurs 3 et 4.

## Revendications

1. Réchauffeur électrique (9) pour circuit de chauffage (1) de véhicule automobile renfermant un liquide caloporteur, ce réchauffeur (9) comprenant une entrée de fluide (11) ainsi qu'une première sortie de fluide (12) et une seconde sortie de fluide (13), et des moyens (16, 17) pour chauffer électriquement le liquide caloporteur allant à la première sortie (12) et le liquide caloporteur allant à la seconde sortie (13), la première et la seconde sortie (12, 13) étant destinées à être raccordées respectivement à un premier et à un second radiateur (3, 4) du circuit de chauffage (1), pour réchauffer ces deux radiateurs (3, 4), **caractérisé en ce que** lesdits moyens (16, 17) répartissent de manière commandée le chauffage entre le liquide caloporteur allant à la première sortie (12) et le liquide caloporteur allant à la seconde sortie (13), pour réchauffer les deux radiateurs (3, 4) à des températures différentes.

2. Réchauffeur selon la revendication 1, comprenant un premier organe chauffant (16) et un second organe chauffant (17) distincts et agencés pour recevoir chacun une partie du liquide caloporteur admis par l'entrée (11), et une carte électronique de puissance (19) pour alimenter ces organes chauffants (16, 17) en répartissant de façon commandée la puissance injectée dans chaque organe chauffant (16, 17), les premier et second organes chauffants (16, 17) ayant leurs sorties reliées respectivement à la première et à la seconde sortie (12, 13) du réchauffeur (9).

3. Système de chauffage de véhicule automobile comprenant un circuit de chauffage (1) renfermant un liquide caloporteur, ce circuit de chauffage étant équipé d'un premier et d'un second radiateur (3, 4) pour diffuser vers deux régions distinctes de l'habitacle du véhicule de la chaleur, et d'un réchauffeur électrique (9) tel que défini à la revendication 1 ou 2, la première et la seconde sortie de fluide (12, 13) du réchauffeur (9) étant raccordées respectivement au premier et au second radiateur (3, 4), les sorties du premier et du second radiateur (3, 4) étant conjointement raccordées à l'entrée (11) du réchauffeur (9).

4. Système selon la revendication 3, **caractérisé en ce que** les premier et second radiateurs (3, 4) forment un radiateur d'une seule pièce.

5. Système selon la revendication 3 ou 4, **caractérisé en ce que** les premier et second radiateurs (3, 4) sont séparés l'un de l'autre par une paroi (33).

6. Système selon l'une quelconque des revendications 3 à 5, dans lequel les deux radiateurs (3, 4) sont intégrés à un même organe de diffusion de chaleur (2 ; 31 ; 32).

7. Système selon la revendication 6, **caractérisé en ce que** l'organe de diffusion de chaleur (2 ; 32) comprend au moins une sortie (8) qui est reliée aux sorties des premier et second radiateurs (3, 4).

8. Système selon la revendication 7, **caractérisé en ce que** l'organe de diffusion de chaleur (31) comprend deux sorties (28, 28') qui sont reliées respectivement aux sorties des premier et second radiateurs (3, 4).

9. Système selon la revendication 3, **caractérisé en ce que** les premier et second radiateurs (3, 4) sont intégrés dans des organes de diffusion de chaleur (102, 104) distincts l'un de l'autre.

## Patentansprüche

1. Elektrischer Erhitzer (9) für einen Heizkreislauf (1) eines Kraftfahrzeugs, der eine Wärmeträgerflüssigkeit enthält, wobei dieser Erhitzer (9) einen Fluideingang (11) sowie einen ersten Fluidausgang (12) und einen zweiten Fluidausgang (13) und Einrichtungen (16, 17) zum elektrischen Erhitzen der zum ersten Ausgang (12) gehenden Wärmeträgerflüssigkeit und der zum zweiten Ausgang (13) gehenden Wärmeträgerflüssigkeit enthält, wobei der erste und der zweite Ausgang (12, 13) dazu bestimmt sind, an einen ersten bzw. zweiten Heizkörper (3, 4) des Heizkreislaufs (1) angeschlossen zu werden, um diese zwei Heizkörper (3, 4) zu erhitzen, **dadurch gekennzeichnet, dass** die Einrichtungen (16, 17) das Erhitzen zwischen der zum ersten Ausgang (12) gehenden Wärmeträgerflüssigkeit und der zum zweiten Ausgang (13) gehenden Wärmeträgerflüssigkeit gesteuert verteilen, um die zwei Heizkörper (3, 4) auf unterschiedliche Temperaturen zu erhitzen.

2. Erhitzer nach Anspruch 1, der ein erstes Heizorgan (16) und ein zweites Heizorgan (17), die unterschiedlich und eingerichtet sind, je einen Teil der durch den Eingang (11) eingelassenen Wärmeträgerflüssigkeit zu empfangen, und eine elektronische Leistungsplatine (19) enthält, um diese Heizorgane (16, 17) zu versorgen, indem die in jedes Heizorgan (16, 17) eingespeiste Leistung gesteuert verteilt wird, wobei die Ausgänge der ersten und zweiten Heizorgane (16, 17) mit dem ersten bzw. zweiten Ausgang (12, 13) des Erhitzers (9) verbunden sind.

3. Heizsystem eines Kraftfahrzeugs, das einen eine Wärmeträgerflüssigkeit enthaltenden Heizkreislauf (1) enthält, wobei dieser Heizkreislauf mit einem ersten und einem zweiten Heizkörper (3, 4), um Wärme zu zwei unterschiedlichen Bereichen des Fahrzeuginnenraums auszustrahlen, und mit einem wie in Anspruch 1 oder 2 definierten elektrischen Erhitzer (9) ausgestattet ist, wobei der erste und der zweite Fluidausgang (12, 13) des Erhitzers (9) an den ersten bzw. zweiten Heizkörper (3, 4) angeschlossen sind, wobei die Ausgänge des ersten und des zweiten Heizkörpers (3, 4) zusammen an den Eingang (11) des Erhitzers (9) angeschlossen sind.

4. System nach Anspruch 3, **dadurch gekennzeichnet, dass** der erste und der zweite Heizkörper (3, 4) einen einstückigen Heizkörper bilden.

5. System nach Anspruch 3 oder 4, **dadurch gekennzeichnet, dass** der erste und der zweite Heizkörper (3, 4) durch eine Wand (33) voneinander getrennt sind.

6. System nach einem der Ansprüche 3 bis 5, wobei die
zwei Heizkörper (3, 4) in das gleiche Wärmeausstrahlungsorgan (2; 31; 32) integriert sind.

7. System nach Anspruch 6, **dadurch gekennzeichnet,**
**dass** das Wärmeausstrahlungsorgan (2; 32) mindestens einen Ausgang (8) enthält, der mit den Ausgängen der ersten und zweiten Heizkörper (3, 4) verbunden ist.

8. System nach Anspruch 7, **dadurch gekennzeichnet,**
**dass** das Wärmeausstrahlungsorgan (31) zwei Ausgänge (28, 28') enthält, die mit den Ausgängen des ersten bzw. zweiten Heizkörpers (3, 4) verbunden sind.

9. System nach Anspruch 3, **dadurch gekennzeichnet,**
**dass** der erste und der zweite Heizkörper (3, 4) in unterschiedliche Wärmeausstrahlungsorgane (102, 104) integriert sind.

## Claims

1. Electric heater (9) for a motor vehicle heating circuit (1) which contains a heat-exchange liquid, this heater (9) comprising a fluid inlet (11) and a first fluid outlet (12) and a second fluid outlet (13) and means (16, 17) for electrically heating the heat-exchange liquid directed to the first outlet (12) and the heat-exchange liquid directed to the second outlet (13), the first and the second outlet (12, 13) being intended to be connected to a first and a second radiator (3, 4) of the heating circuit (1), respectively, in order to heat these two radiators (3, 4) **characterized in that** said means (16, 17) distribute in a controlled manner the heating between the heat-exchange liquid directed to the first outlet (12) and the heat-exchange liquid directed to the second outlet (13), in order to heat the two radiators (3, 4) to different temperatures.

2. Heater according to Claim 1, comprising a first heating member (16) and a second heating member (17) which are separate and which are arranged so as to each receive a portion of the heat-exchange liquid introduced via the inlet (11) and an electronic power card (19) in order to supply electrical power to these heating members (16, 17) by distributing in a controlled manner the power introduced into each heating member (16, 17), the first and second heating members (16, 17) having their outlets connected to the first and second outlet (12, 13) of the heater (9), respectively.

3. Motor vehicle heating system comprising a heating circuit (1) which contains a heat-exchange liquid, this heating circuit being provided with a first and a second radiator (3, 4) in order to diffuse the heat to two separate regions of the passenger space of the vehicle, and an electric heater (9) as defined in Claim 1 or 2, the first and the second fluid outlet (12, 13) of the heater (9) being connected to the first and second radiator (3, 4), respectively, the outlets of the first and second radiator (3, 4) being jointly connected to the inlet (11) of the electric heater (9).

4. System according to Claim 3, **characterized in that**
the first and second radiators (3, 4) form a radiator in one piece.

5. System according to Claim 3 or claim 4,
**characterized in that** the first and second radiators (3, 4) are separated from each other by a wall (33).

6. System according to one of Claims 3 to 5, wherein
the two radiators (3, 4) are integrated in the same heat diffusion member (2; 31; 32).

7. System according to Claim 6, **characterized in that**
the heat diffusion member (2; 32) comprises at least one outlet (8) which is connected to the outlets of the first and second radiators (3, 4).

8. System according to Claim 7, **characterized in that**
the heat diffusion member (31) comprises two outlets (28, 28') which are connected to the outlets of the first and second radiators (3, 4), respectively.

9. System according to Claim 3, **characterized in that**
the first and second radiators (3, 4) are integrated in heat diffusion members (102, 104) which are separate from each other.
